# EUROPÄISCHE PATENTANMELDUNG

(11) **EP 0 621 139 A1**
(43) Veröffentlichungstag der Anmeldung: **26.10.1994**
(21) Anmeldenummer: 94105304.3
(22) Anmeldetag: 06.04.1994
(51) Int. Cl.: B42D 15/10

(54) **Verfahren und Vorrichtung zur Herstellung oder Vervollständigung von Kreditkarten u. dgl.**

(30) Priorität: 17.04.1993 DE 4312574
(71) Anmelder: INTERLOCK AG, CH-8952 Schlieren (CH)
(72) Erfinder: Vogt, Werner, CH-5453 Remetschwil (CH)
(74) Vertreter: Otte, Peter, Dipl.-Ing.

(57) **Zusammenfassung**

Zur Herstellung oder Vervollständigung (Individualisierung) von Karten wie Kreditkarten o.dgl., bei denen entsprechende Daten, auch mit Bild, mittels Videodruckverfahren spiegelverkehrt auf eine spätere Kartenschicht aufgebracht und die aus dieser und mindestens einer weiteren Schicht bestehende Karte laminiert wird, wird vorgeschlagen, die dem Videodruck zugeführte Kartenschicht als Doppelschicht (10), bestehend aus zu bedruckender Folie (11,11') und Trägerschicht (12,12') auszubilden und an dieser Ritzlinien oder Perforationen anzubringen, von denen mindestens eine dem späteren Nutzformat entspricht.

## Beschreibung

### Stand der Technik

Die Erfindung geht aus von einem Verfahren nach dem Oberbegriff des Anspruchs 1 bzw. einer Vorrichtung nach dem Oberbegriff des Anspruchs 12.

Ein bekanntes Verfahren zum Aufbringen und Versiegeln von Informationen auf kartenförmigen Informationsträgern (europäische Patentanmeldung 0 399 410) verwendet einen Videoprinter, mit welchem die gewünschten Daten und/oder Abbildungen direkt auf eine der Laminatschichten der Karte aufgedruckt werden, die auch eine dünne transparente Folie, üblicherweise eine PVC-Folie sein kann. Druckt man spiegelverkehrt auf eine solche transparente Folie und verschweißt diese dann umgekehrt mit den restlichen Laminatschichten zur fertigen Karte, dann bildet die Rückseite der bedruckten Folie gleichzeitig eine Schutzschicht für die Daten, die von der Rückseite aus gesehen und durch diese transparente Deckfolie hindurch dann in Normalschrift lesbar sind.

Dabei wird ferner so vorgegangen, daß die einzelnen Schichten des Kartenlaminats in den Warmpreßbereich eines Laminators eingegeben und durch Einwirken von Druck und Wärme miteinander verschweißt bzw. kaschiert werden.

Bei einem weiteren Verfahren zur Herstellung von Identifikationskarten (US-Patent 4 999 065) werden die Daten ebenfalls zusammen mit einem mittels einer Videokamera aufgenommenen Bildes auf dem Bildschirm eines Rechners zusammengestellt und anschließend mittels eines Laserdruckers auf einer Papierschicht aufgebracht. Die Papierschicht wird dann unter Wärme- und Druckeinwirkung zwischen zwei transparenten thermoplastischen Materialschichten, bevorzugt Polyester laminiert. Dabei wird versucht, so viel Druck und Wärme beim Laminiervorgang auszuüben, daß der Kunststoff angrenzend zu der bedruckten Papierschicht gerade so stark schmilzt, daß er hinreichend in die Papierfasern oder deren Zwischenräume eindringt. Anschließend wird das Laminat in eine Kühlkammer eingebracht und nachfolgend mittels eines Stanzgerätes auf Format gestanzt.

Der Erfindung liegt die Aufgabe zugrunde, ein Verfahren zur Herstellung oder Vervollständigung, nämlich Individualisierung bestehender Karten, beispielsweise Chipkarten, so zu vereinfachen, daß mit wenigen Handgriffen eine nach einem der bekannten Videoprintverfahren bedruckte Folie problemlos und hochgenau ausgerichtet mit weiteren Laminatschichten, beispielsweise Kartenrohling oder Chipkarte einwandfrei verschweißt werden kann.

### Vorteile der Erfindung

Die Erfindung löst die gestellte Aufgabe mit den Merkmalen des Anspruchs 1 bzw. des Anspruchs 12 und hat den Vorteil, daß sowohl ein einwandfreier Videodruck im Nutzformatbereich in einem Videoprinter beliebiger Art möglich ist als auch die anschließende hochgenau ausgerichtete Verschweißung der üblicherweise hauchdünnen Datenträgerfolie mit den restlichen Laminatschichten, beispielsweise einem Kartenrohling oder einer fertigen Chipkarte, die durch die Kaschierung mit der Datenträgerfolie individualisiert und vervollständigt wird.

Dabei ist von besonderem Vorteil, daß im Videoprinter eine stabile, dem Druckformat des Videoprinters angepaßte großformatige Folie vorhanden ist, die vom Videoprinter problemlos gehandhabt und ausgedruckt werden kann. Diese Folie oder dieses Blatt für den Videoprinter stellt tatsächlich eine Doppelschicht dar und besteht aus einer festen Trägerfolie stärkerer Abmessungen und dem mit dieser verbundenen, bevorzugt transparenten Transfermaterial, auf welchem der Videoprinter spiegelverkehrt druckt (Datenfolie). Allerdings kann diese (transparente) Folie auch unbedruckt bleiben. In diesem Fall dient sie (lediglich) als Abdeck/Schutzschicht für andere Laminatschichten.

Entscheidend ist dabei, daß die beiden fest miteinander verbundenen Schichten mit vorgegebenen Ritzlinien bzw. Perforationen mindestens von einer Seite versehen sind, so daß es nach dem Printvorgang möglich ist, die nunmehr bedruckte Doppelschicht aus sehr dünner (transparenter) Datenfolie und stabiler, üblicherweise aus weißem PVC-Material bestehender Trägerfolie durch Trennen entlang vorgegebener Ritz- oder Perforationslinien sozusagen umzuformatieren und für den nachfolgenden Kaschiervorgang mit einer Karte oder Kartenlaminatschichten vorzubereiten. Aufgrund der einwandfreien Perforation ist die Trennung problemlos möglich und mit wenigen Handgriffen erledigt; das durch diese Abtrennung entlang der Perforation gewonnene, jedenfalls im Nutzformatbereich noch immer doppelschichtige Material weist nunmehr einwandfreie Anlegemarken oder Markierungen auf, die für eine hochpräzise Ausrichtung für den Kaschiervorgang geeignet sind. Bei diesem erfolgt der trennungssichere Verbund der dünnen Datenfolie mit der Karte zur endgültig fertigen Karte, wobei auch während des Kaschiervorganges die Trägerfolie noch anwesend ist.

Erst nach der Entnahme des fertigen Laminats aus dem Laminator, bei welchem die jeweiligen Schichten unter gleichmäßiger Druck- und Wärmeausübung miteinander verschweißt bzw. kaschiert worden sind, wird die Trägerfolie von der nunmehr absolut trennungssicher mit der restlichen Karte verbundenen dünnen Datenfolie abgezogen. Hierdurch ergibt sich der weitere Vorteil, daß sich nunmehr, also nach dem Laminiervorgang, die datentragende Seite der dünnen Datenfolie innen befindet und daher vollständig geschützt ist. Eine nachträgliche Stanzung oder Zuschneiden der aus dem Laminator entnommenen fertigen Karte ist dann überflüssig.

Mit besonderem Vorteil eignet sich das erfindungsgemäße, durch Ritzungen und Perforierungen im zu bedruckenden Ausgangsmaterial gekennzeichnete Verfahren zur Vervollständigung bzw. Individualisierung schon fertiger Karten, beispielsweise sogenannter Chipkarten, so daß es nunmehr ohne größeren Aufwand möglich ist, einen elektronischen Chip mit sämtlichen Einzelheiten aufweisende Karten bestimmten Benutzern zuzuordnen, indem deren individuelle Daten, falls gewünscht auch mit Farbfoto, absolut trennungssicher auf der Chipkarte ebenfalls noch aufgebracht werden. Dabei bleiben die ursprünglichen Formen, Funktionen und Gegebenheiten dieser Karte durch den erneuten, zur Vervollständigung oder Individualisierung führenden Kaschiervorgang vollständig unbeeinflußt.

Durch die in den Unteransprüchen aufgeführten Maßnahmen sind vorteilhafte Weiterbildungen und Verbesserungen der Erfindung möglich. Besonders vorteilhaft ist die Ausbildung der Ritzlinien oder Perforationen der ursprünglichen Ausgangsdoppelschicht in Form zweier umlaufend geschlossener Rahmen, so daß es in einem ersten Trennvorgang längs eines äußeren Perforationsrahmens möglich ist, nach dem Videodruck die restlichen Bestandteile der bedruckten Doppelschicht mit Positionsmarkierungen zu versehen, die deren exakte Positionierung im Laminator ermöglichen unter Einbeziehung eines speziell ausgebildeten, eine Art Halte- oder Preßform bildenden äußeren Rahmens.

Dieser Rahmen im Laminator ist hochklappbar, so daß das Zwischenerzeugnis nach Abtrennung längs des ersten Perforationsrahmens mittels eigener Positionier- bzw. Anlegemarken mit Bezug auf den Rahmen sowie der später noch einzulegenden restlichen Laminatschichten (oder einer sonstigen fertigen zu individualisierenden Karte) hochgenau positioniert ist. Diese Laminatschichten werden durch das Vorhandensein des Rahmens in eine exakte Position zu dem Zwischenerzeugnis gebracht, so daß sich letztendlich eine einwandfreie Positionierung der Datenfolie am Zwischenerzeugnis zu den Laminatschichten für den Kaschiervorgang ergibt.

### Zeichnung

Ausführungsbeispiele der Erfindung sind in der Zeichnung dargestellt und werden in der nachfolgenden Beschreibung näher erläutert. Es zeigen:
- Fig. 1: schematisiert eine Draufsicht auf die Ausgangsdoppelschicht mit Darstellung der verschiedenen, von Perforationen bzw. Ritzlinien gebildeten Umrandungen. wobei die äußere Umrandung, durch deren Abtrennung ein Zwischenerzeugnis resultiert, gestrichelt und die innere Umrandung, die das Nutzformat angibt, strichpunktiert ausgeführt ist;
- Fig. 2: zeigt die Ausgangsdoppelschicht der Fig. 1 im Querschnitt, so daß auch eine angenäherte Ritztiefe der Perforationen erkennbar wird, die von beiden Seiten in die Doppelschicht eingebracht sind;
- Fig. 3: zeigt stark schematisiert eine mögliche Ausführungsform ausschnittsweise des Laminatorbereichs, bestehend aus oberer und unterer Heiz/Druck-Platte und einem Fixier- bzw. Halterahmen für das zu verschweißende Laminat.

### Beschreibung der Ausführungsbeispiele

Der Grundgedanke vorliegender Erfindung besteht darin, für den Kaschiervorgang zur Herstellung oder Vervollständigung einer beliebigen Karte eine Doppelschicht, diese bestehend aus Trägerfolie und mit dieser verbundenen, dünnen Folie, vorzusehen und die Doppelschicht maschinell entlang vorgegebener Umrandungen vorzuritzen oder vorzustanzen, so daß Trennlinien oder Perforationen entstehen.

Hierdurch ergibt sich eine leichte Handhabbarkeit des gesamten, nachfolgend ablaufenden Videodruck- und Kaschiervorgangs mit erheblichen Erleichterungen und einer sehr hohen, erzielbaren Präzision in der relativen Positionierung der einzelnen Schichten zueinander.

Die maschinelle Ritzung ist so ausgelegt, daß eine äußere und eine innere Umrandung längs Ritzlinien gebildet sind, wobei durch Abtrennung längs der äußeren Umrandung ein Zwischenerzeugnis resultiert, welches Positioniermarken bildet, während die Abtrennung längs der inneren Umrandung für die endgültige Trennung der Trägerfolie von der im Nutzformat verbleibenden Datenfolie sorgt, die in diesem Fall aber schon untrennbar mit dem restlichen Laminat verschweißt bsw. kaschiert ist.

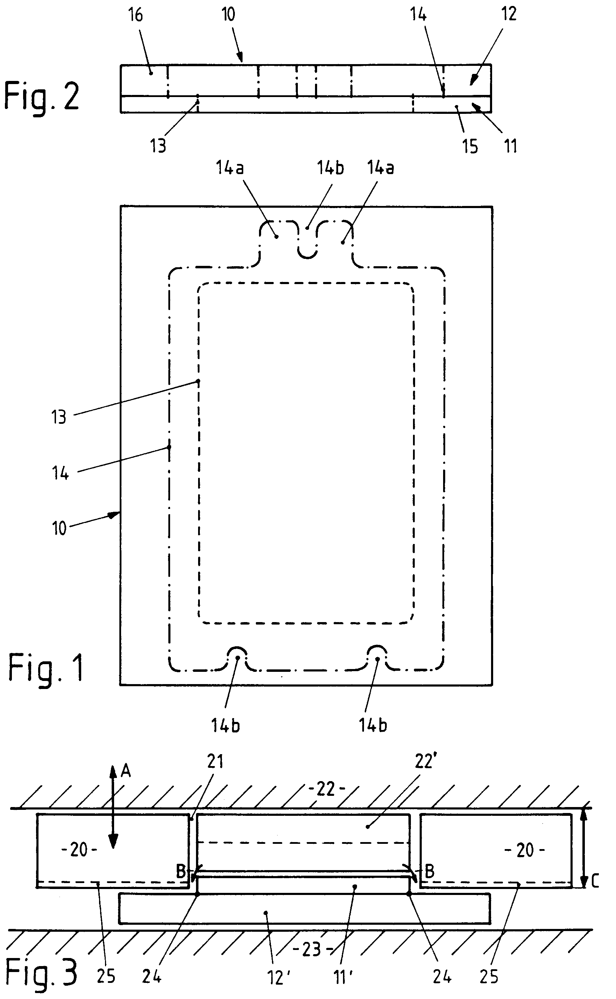

In Fig. 1 ist eine Doppelschicht 10 gezeigt, bestehend aus einer dünneren und vorzugsweise mit Bezug auf eine dickere Trägerschicht dünne Folie 11, die bedruckt oder al s spätere Deckschicht eines Laminats unbedruckt bleibt, im folgenden allerdings durchgehend als Datenfolie 11 bezeichnet wird, sowie der schon erwähnten Trägerschicht 12, mit welcher die Datenschicht verbunden ist. Die beiden Einzelschichten, also Datenfolie 11 und Trägerfolie 12 haben beide die aus der Draufsicht der Fig. 1 erkennbaren Außenabmessungen, weisen also beispielsweise rechteckförmiges Format auf. Eine solche Doppelschicht 10 läßt sich in einem üblichen Videoprinter problemlos mit den gewünschten Informationen, Daten und auch "fotografischen" Abbildungen versehen, wobei so vorgegangen werden kann, wie beispielsweise in der veröffentlichten europäischen Patentanmeldung 0 399 410 beschrieben. Bevorzugt handelt es sich bei dem verwendeten Videoprinter um einen Farbprinter, der die Datenfolie im Bereich des Nutzformats der Doppelschicht 10 mit Hilfe eines geeigneten Farbbands aufeinanderfolgend mit drei Grundfarben bedruckt (Sublimationsverfahren), wobei die Farben durch Wärme übertragen werden und sich auf dem Nutzformatbereich überlagern (thermal-transfer-Dye-diffusion). Die Qualität der von einem solchen Videoprinter erzeugten Farbbilder ist hervorragend.

Entsprechend Fig. 1 ist das erwähnte Nutzformat durch die innere (Ritz- bzw. Perforations)Umrandung 13 gestrichelt dargestellt und entspricht erkennbar einem üblichen Kartenformat. Eine zweite äußere Umrandung 14 folgt der strichpunktierten Linienfürung und ist ebenfalls durch eine maschinelle Vorstanzung oder Vorritzung entstanden.

Das Überraschende an diesen beiden vorgeritzten Umrandungen 13 und 14, die sehr sauber durchgeführt sind und eine problemlose Materialtrennung zulassen, besteht darin, daß die äußere Umrandung 14 von der Oberseite, bzw. genauer gesagt von der Seite der Trägerfolie 12 aus erfolgt, wenn man diese als die Oberseite im folgenden definitionsgemäß bezeichnet und man erkennt aus der Darstellung der Fig. 2, daß diese umlaufende Ritzung oder Perforation 14 die Trägerfolie 12 vollständig durchtrennt - gegebenenfalls mit einigen wenigen, leicht zu überwindenden Haltepunkten im entsprechenden Abstand, was empirisch geklärt werden kann -, jedoch die darunter liegende Datenfolie 11 nicht oder nur ganz schwach angreift, während die innere Perforation oder Ritzung entlang der Umrandung 13 von der Datenfolienseite aus erfolgt, den Nutzformatsbereich definiert und die Datenfolie vollständig durchtrennt - auch hier falls gewünscht mit einigen wenigen Haltepunkten oder Verbindungsbrücken im vorgegeben Abstand -, während die darüber liegende Trägerfolie 12 nicht oder kaum betroffen ist.

Ferner läßt sich aus der Darstellung der Fig. 1 deutlich erkennen, daß die äußere Umrandung 14, grob im Abstand der inneren Umrandung des Nutzformats folgend, äußere, also randseitige Vorsprünge 14a mit dazwischen angeordneten Ausnehmungen 14b bildet, wobei diese Änderungen der äußeren Konturlinie, die grundsätzlich beliebig sind, Positionsmarkierungen bilden, in die, worauf weiter unten noch eingegangen wird, Stifte oder Vorsprünge im Bereich der Maulöffnung des Laminators eingreifen zur hochgenauen Positionierung des den Videodruck tragenden Nutzformatbereichs.

Der gesamte Vorgang läuft dann wie folgt ab: Die Doppelschicht 10 im Format der Draufsicht der Fig. 1 wird zunächst, beispielsweise randseitig mit anderen Blättern nach Art eines Films und mit diesem gegebenenfalls auch hier über Perforation oder sonstige Ritzlinien verbunden, dem Videoprinter zugeführt, wobei die äußere Umrandung, verstärkt durch die stabile dickere Trägerfolie 12 (zu diesem Zeitpunkt hat noch keine Trennung entlang der Ritzlinien stattgefunden) hinreichende Positionierungsanlagemöglichkeiten im Videoprinterbereich schafft oder in diesem vorhanden sind, so daß der Videoprinter innerhalb des Nutzformats, also der inneren Umrandung 13 die entsprechenden Daten auf der Datenfolie 13 anbringen kann. Die Positionierung ist hier ohnehin nicht kritisch.

Anschließend, also nachdem der Videoprinter ein solches Doppelschicht-Blatt ausgeworfen hat, erfolgt, vorzugsweise von Hand, die Abtrennung der äußeren Umrandung 14 längs dieser Ritzlinie, wobei allerdings, wie aus der Darstellung der Fig. 2 erkennbar ist, gleichzeitig auch der das Nutzformat auf der Unterseite umgebende Rand 15 mit abgeht, also im Randbereich die Trägerfolie 12 als Umrandung 16 abgezogen wird und gleichzeitig an dieser anhaftend auch, nunmehr längs der vorgeritzten Umrandung 13 auch der Randteil der Datenfolie gleich mitabgezogen wird, so daß ein im Randbereich abgetrepptes Zwischenerzeugnis übrig bleibt, bestehend aus dem inneren Kern der Nutzfolie im Nutzformat, die an dem inneren Kernbereich der Trägerfolie 12 anhaftet, wobei die Außenabmessungen der Trägerfolie vorzugsweise an allen Stellen das Nutzformat der Datenfolie überragt und die Trägerfolie die weiter vorn schon erwähnten Positionsmarkierungen 14a, 14b aufweist.

Damit sind alle Vorbereitungen getroffen, um nunmehr den Kaschiervorgang mit sich schon im Kartenformat befindenden restlichen Laminatschichten oder einer schon fertigen, jedoch noch zu vervollständigenden, nämlich zu individualisierenden Chipkarte durchzuführen.

Hierzu weist die Aufnahmeöffnung eines entsprechend ausgebildeten Laminators, der durch gleichmäßige Druck- und Wärmeausübung einzelne Laminatschichten miteinander verschweißt bzw. kaschiert, zwischen oberer und unterer Heizplatte (von an sich grundsätzlich beliebiger Ausführungsform) Anlagestege oder entsprechend komplementär ausgebildete Positionsmarkierungen auf, so daß es möglich ist, bei geöffnetem oberem und unterem Preßstempel das Zwischenerzeugnis äußerst präzise im Laminator zu positionieren. Durch Verbinden mit den restlichen Laminatschichten, einem Kartenrohling oder einer ansonsten fertigen Karte (Chipkarte) kann dann der Kaschiervorgang vervollständigt werden.

Hier ergeben sich weitere vorteilhafte Ausgestaltungen, auf die im folgenden eingegangen wird.

Zunächst ist der Raum zwischen den beiden Preßstempeln im Laminator, dessen grundsätzlicher Aufbau bekannt ist und der daher im einzelnen nicht erläutert zu werden braucht, durch Anordnung eines zusätzlichen Positionierrahmens 20 vervollständigt, wie dies der schematischen Darstellung der Fig. 3 entnommen werden kann. Der Positionierrahmen 20 ist so ausgebildet, daß er eine innere, durchgängige Öffnung 21 in den Abmessungen des aus Fig. 1 erkennbaren Nutzformats aufweist und ferner aus dem Preßplattenbereich des Laminators jedenfalls so entnehmbar oder entfernbar ist, daß Laminatschichten eingelegt werden können.

Bei dem bevorzugten Ausführungsbeispiel befinden sich oberhalb und unterhalb des Positionierrahmens 20 ein oberer Preßstempel 22 und ein unterer Preßstempel 23 von beliebigem, nicht näher zu erläuterndem Aufbau, wobei der Positionierrahmen 20 bei geöffneten Preßstempeln 22 und 23 hinten, also im Inneren der Preßstempel-Öffnung, nach oben schwenkbar längs dem Doppelpfeil A gelagert ist, so daß der Positionierrahmen 20 bei Einhaltung seiner vorgegebenen Position nach oben abgehoben werden kann.

Der nächste Schritt besteht dann darin, daß das durch die Abtrennung der Perforationen gewonnene Zwischenprodukt, wie weiter vorn erläutert, bestehend aus der Restträgerfolie 12' im Format der Umrandung 14 und der an dieser unverändert anhängenden Restdatenfolie 11' im Nutzformat entsprechend der Umrandung 13 umgekehrt in die Stempelöffnung des Laminators bei nach oben abgeschwenktem Positionierrahmen 20 eingelegt wird, wie dies die Fig. 3 zeigt, und zwar, wie weiter vorn schon erwähnt, hochgenau positioniert mit Hilfe der (nicht dargestellten) komplementären Positionismarkierungen im Bereich der Preßstempelöffnung. Durch diese Positionsmarkierung kommt nämlich das Nutzformat der Restdatenfolie 11' haargenau unter die Positionieröffnung 21 des Positionierrahmens 20 zu liegen und ragt, natürlich nur um ihre eigene hauchdünne Dicke, in diese Öffnung 21 auch hinein, wie dies in Fig. 3, verständlicherweise stark übertrieben gezeichnet, dargestellt ist.

Es ist dann nachfolgend im Grunde problemlos möglich, auf das Nutzformat der bedruckten Restdatenfolie 11' beliebige Laminatschichten 22', einen Kartenrohling oder auch eine fertige Chipkarte, die z.B. aufgedruckt fertige Daten trägt, in welchem Fall also diese sogenannte "Restdatenfolie" lediglich eine (transparente) Deckschicht bildet, wie eingangs schon erwähnt, noch aufzulegen, indem man diese Schichten einfach in die Positionieröffnung 21, die ja genau diesem Kartenformat entspricht, einlegt, wodurch auch die Relativpositionierung zur bedruckten Datenfolie hergestellt wird.

Anschließend wird die Laminatoröffnung durch das Aufeinanderzufahren der beiden Preßstempel 22, 23 geschlossen und der Kaschiervorgang beginnt in der üblichen Weise, wodurch die Schichten untrennbar miteinander verschweißt werden.

In diesem Zusammenhang ist noch auf folgendes hinzuweisen: Da, wie aus Fig. 3 erkennbar, die Datenfolie 11' sozusagen innen liegt und unmittelbar mit der daraufliegenden Karte 22 verschweißt, also kaschiert wird, befindet sich der Farbdruck notwendigerweise zwischen einander zugewandten Schichten, da der Videoprinter das Farbbild natürlich nur außen auf der Datenfolie der Doppelschicht der Fig. 1 anbringen kann.

Folglich ist - in Ausgestaltung -, wenn hier nicht andere Technologien oder Drucktechniken eingreifen, der Videoprinterausdruck auf der Datenfolie in deren Nutzformat spiegelverkehrt aufgebracht, und die Datenfolie 11 selbst ist transparent, so daß durch die Datenfolie hindurch die (Farb)Informationen, die sich nach dem Kaschieren im Inneren der Karte befinden, erkennbar sind.

Hierzu ist allerdings noch ein letzter Schritt zu gehen, der darin besteht, daß nach der Entnahme des Kaschierprodukts aus dem Laminator nach Hochklappen des Positionierrahmens 20 noch die Restträgerfolie 12' von dem verschweißten Laminat abzuziehen ist, was problemlos durchgeführt werden kann - man nimmt beispielsweise die insofern fertige Karte in die eine Hand und zieht die Trägerfolie einfach von der mit der Karte innig verschweißten Datenfolie im Nutzformat ab.

Wie schon erwähnt, führt diese Technik dazu, daß sich die gesamte Informationsbeschriftung innerhalb der Karte befindet und die Rückseite der Datenfolie nach außen sozusagen als Schutzschicht oder Kaschierüberzug selbst wirkt, so daß an den Daten auch in keiner Weise mehr manipuliert werden kann, ohne Zerstörung der Karte.

In diesem Zusammenhang können sich noch einige Besonderheiten ergeben. Es kann sich als zweckmäßig erweisen, den Positionierausschnitt 21 des Rahmens 20 und/oder das Nutzformat der Datenfolie und/oder die mit dieser zu verschweißenden Laminatschichten oder fertigen Karten in den Dimensionen geringfügig unterschiedlich zu gestalten, so daß während des Laminiervorgangs, also dem Aufbringen von Wärme und Druckeinwirkung, die Karte 22', die hier stellvertretend für alle möglichen Arten von Laminatschichten oder fertigen Chipkarten oder Kartenrohlingen steht, im unteren, inneren Bereich, wenn auch nur geringfügig, sozusagen um die Außenumrandung der anliegenden Datenfolie 11' im Nutzformat herumfließen kann, wie die Pfeile B andeuten, so daß die Datenfolie auch seitlich eingeschlossen und vom Kunststoff der Karte 22 umfaßt wird, der beim Kaschieren geringfügig anschmelzen kann.

Dabei bilden dann gleichzeitig die Eckbereiche 24 im Übergang zur Restträgerfolie 12' erkennbar Abdichtungen für das randflüssige Kartenkunststoffmaterial, da die untere Rahmenkante fest auf die Restträgerfolie 12' gepreßt ist und weiterführend in diesem Bereich daher nichts mehr hineinfließen kann. Dies ist eine zweite vorteilhafte Ausgestaltung, die sich dadurch ergibt, daß man das Nutzformat der Datenfolie anhängend an eine "Positionier-Trägerfolienumrandung" zusammen mit dieser kaschiert und die Restträgerfolie 11 nachträglich abzieht.

Das für Datenfolie und Trägerfolie verwendete Material ist grundsätzlich beliebig, besteht bevorzugt aus Kunststoffolien und bevorzugt aus Folien aus PVC (Polyvinylchlorid) oder Polyäthylen oder einem sonstigen Kunststoffmaterial, wobei durchaus bekannt ist, daß PVC und Polyäthylen sich nicht oder nur schwer miteinander verbinden lassen.

Hier kann allerdings eine Eigenheit des dargestellten Herstellungsverfahrens zur Problemlösung beitragen, indem nämlich die Druckfarben, mit denen jedenfalls das Nutzformat der Datenfolie bedeckt ist, wie ein Klebstoff wirkt oder wirken kann bei entsprechender Auslegung jedenfalls und sich so als Binder zwischen den beiden Materialien der Datenfolie 11, 11' und der mit dieser zu laminierenden Schichten (Karte 22) ergibt. So kann man beispielsweise für die Datenfolie eine hauchdünne Polyesterfolie nehmen mit guten Verankerungseigenschaften für das Farbmaterial, wobei die Farbe sich selbst dann wieder gut mit PVC verbindet, so daß man insgesamt zu einer perfekten Verbindung der Karte insgesamt gelangt, wenn die Farbe selbst als Klebstoff eingesetzt wird.

Dabei kann die Höhe C des Positionierrahmens exakt schichtdickengenau sein oder in einer weiteren Ausgestaltung jeden-
falls in vorgegebenen Grenzen, nachgiebig bzw. elastisch sein, damit von den beidseitigen Preßstempeln 22, 23 auch bei unterschiedlichen Dickenabmessungen der zu kaschierenden Schichten die erwünschte gute Druck-und Wärmewirkung ausgeübt werden kann. Es kann sich daher als sinnvoll erweisen, den Rahmen, der bevorzugt aber eine metallische Umrandung bildet, beispielsweise mit einer geeigneten zusätzlichen, nachgiebigen Schicht 25, angrenzend an den unteren oder oberen Preßstempel oder auch als Zwischenschicht zu versehen, die aus einem Elastomer besteht, beispielsweise Silikon, Gummi, Kautschuk o. dgl., gegebenenfalls randverstärkt durch eine Messingumrandung oder Messingauflage, so daß der Rahmen selbst in seiner Dickenabmessung nachgiebig ist, also dort, wo seine Positioniereigenschaften nicht benötigt werden und die Preßstempel 22, 23 für den Kaschiervorgang den vollen Druck und Wärmeübergang auf das Laminat auszuüben haben.

Bevorzugt wird allerdings für die Datenfolie ein PVC-Material verwendet, während die Trägerfolie, die bei den einzelnen Behandlungsschritten lediglich als Hilfsmittel verschiedener Art eingesetzt ist, letztendlich vollständig abgezogen wird und daher nicht mehr Bestandteil der fertigen Karte ist und daher auch aus einem beliebigen Material, ohne mit dem Kartenmaterial kompatibel sein zu müssen, bestehen kann.

Ein besonderer Vorteil ergibt sich, wie weiter vorn schon angedeutet, schließlich noch daraus, daß es durch das erfindungsgemäße Verfahren möglich ist, beliebige, in sich fertige Karten, beispielsweise eine vollständige Elektronik aufweisende Chipkarten endzubehandeln oder zu individualisieren, jedenfalls zu komplettieren durch entsprechende Beschriftungen, Farbbildzusätze u. dgl., indem man einfach anstelle sonstiger Laminatschichten beim Kaschiervorgang entsprechend Fig. 3 eben eine solche fertige Chipkarte in die Aufnahmeöffnung 21 des Positionierrahmens 20 zu deren Positionierung einsetzt und mit der bedruckten Datenfolie verschweißt.

Eine Variante zusätzlich oder anstelle des in seiner Dicke nachgiebigen (elastischen) Rahmens 20 kann die Ausbildung einer der Heizplatten oder Stempel bevorzugt des oberen Stempels 22, in Form eines elastomeren Materials sein oder in Form integrierter elastischer Teilschichten. Dabei ist besonders bevorzugt die Belegung der dem Laminat 22' und der Rahmenöffnung 21 zugewandten Fläche des Stempels 22 mit einer elastischen Wärmeleitfolie, die das Vermögen hat, sich (geringfügig) auch in die Rahmenöffnung einzudrücken bei hoher Temperaturleitfähigkeit. Hierdurch ergibt sich ein besonders guter Kaschiervorgang.

Abschließend wird darauf hingewiesen, daß die Ansprüche und insbesondere der Hauptanspruch Formulierungsversuche der Erfindung ohne umfassende Kenntnis des Stands der Technik und daher ohne einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen sowie den Hauptanspruch in seinem Merkmalsgehalt zu reduzieren.

## Patentansprüche

1. Verfahren zur Herstellung oder Vervollständigung (Individualisierung) von Karten wie Kreditkarten, Ausweisen, Zugangskontrollkarten, Identitätskarten, Chipkarten u. dgl., wobei entsprechende Daten, gegebenenfalls einschließlich Bilddarstellung, mittels Videodruckverfahren - gegebenenfalls spiegelverkehrt - auf eine spätere Kartenschicht aufgebracht und die aus dieser und mindestens einer weiteren Schicht bestehende Karte laminiert wird, dadurch gekennzeichnet, daß die dem Videodruck zugeführte Kartenschicht als Doppelschicht (10), bestehend aus zu bedruckender Folie (Datenfolie 11, 11') und Trägerschicht (12, 12') ausgebildet ist und zur Bildung Von Ritzlinien oder Perforationen, von denen mindestens eine dem späteren Nutzformat entspricht, vorgeritzt oder vorgestanzt wird.

2. Verfahren zur Herstellung oder Vervollständigung (Individualisierung) von Karten wie Kreditkarten, Ausweisen, Zugangskontrollkarten, Identitätskarten, Chipkarten u. dgl., wobei entsprechende Daten, gegebenenfalls einschließlich Bilddarstellung, beteiligten Laminatschichten, einem Kartenrohling oder auch einer (fertigen) Chipkarte aufgebracht und die aus dieser und mindestens einer weiteren Schicht bestehende Karte laminiert wird, dadurch gekennzeichnet, daß eine Doppelschicht (10), bestehend aus (transparenter) Deckfolie (11, 11') und einer Trägerschicht (Trägerfolie 12, 12') zur Bildung von Ritzlinien oder Perforationen, von denen mindestens eine dem späteren Nutzformat der Karte entspricht, maschinell vorgeritzt oder vorgestanzt wird.

3. Verfahren nach Anspruch 1 oder 2, dadurch gekennzeichnet, daß die dem Nutzformat entsprechende Ritzung oder Perforation einer dem späteren Nutzformat der Karte entsprechenden Umrandung (13) folgend auf der Seite der Doppelschicht (10) vorgenommen wird, die von der zu bedruckenden und/oder transparenten Folie (Datenfolie 11) gebildet ist und daß ferner eine weitere Perforation oder Ritzung entlang einer zweiten äußeren Umrandung (14) durchgeführt wird, die auf der anderen Seite (Trägerfolienseite) der Doppelschicht (10) angebracht wird.

4. Verfahren nach einem der Ansprüche 1-3, dadurch gekennzeichnet, daß die vorgegebenen Umrandungen (13, 14) folgenden Ritzungen oder Perforationen auf der Seite, auf welcher sie erfolgen, die zugewandte Folie vollständig durchtrennen, gegebenenfalls mit brückenartigen Sicherungspunkten im vorgegebenen Abstand, die jeweils andere Folie im wesentlichen jedoch nicht berühren.

5. Verfahren nach einem der Ansprüche 1-4, dadurch gekennzeichnet, daß nach dem Aufbringen des (Farb)Drucks im Nutzformatbereich der Doppelschicht durch einen Videoprinter die Doppelschicht von der Trägerfolienseite her aufgebrochen und der äußeren Umrandung (14) folgend die Trägerfolie abgezogen wird, zusammen mit der an diesem Teilbereich der Trägerfolie haftenden Datenfolie (11), die bis zur inneren Umrandung (13) mitabgezogen wird derart, daß sich ein Zwischenerzeugnis ergibt, welches im Randbereich eine abgetreppte Struktur aufweist.

6. Verfahren nach einem der Ansprüche 1-5, dadurch gekennzeichnet, daß der über das von der inneren Umrandung (13) gebildete Nutzformat der Datenfolie (11') überstehende, durch die äußere Umrandung (14) begrenzte Trägerfolienrandbereich mit mechanischen Positionsmarkierungen (Vorsprüngen 14a, Ausnehmungen 14b) in peripherer Verteilung versehen wird, die durch den Stanz- oder Ritzvorgang der äußeren Umrandung (14) vorgegeben und durch das Abziehen der äußeren Umrandung freigelegt werden und die der paßgenauen Einlage des Zwischenerzeugnisses in den Heizstempelbereich eines Laminators dienen.

7. Verfahren nach einem der Ansprüche 1-6, dadurch gekennzeichnet, daß das Zwischenerzeugnis aus restlicher Trägerfolie (12') und daran haftender Datenfolie (11') im Nutzformat, von den Positionsmarkierungen (14a, 14b) randseitig präzisiert so in die von oberen und unteren Preßstempeln des Laminators gebildete Laminatoröffnung eingelegt wird, daß der Datenfolienbereich (11') im Nutzformat paßgenau von einer Positionieröffnung (21) eines Positionierrahmens (20) aufgenommen ist.

8. Verfahren nach einem der Ansprüche 1-7, dadurch gekennzeichnet, daß die Positionieröffnung (21) des Positionierrahmens (20) im Bereich der Preßstempel (22, 23) des Laminators nach oben offen ist und in diese weitere, mit der Datenfolie im Nutzformat zu verschweißende (kaschierende) Schichten (Karte 22) eingelegt werden.

9. Verfahren nach Anspruch 8, dadurch gekennzeichnet, daß die weiteren, mit der Datenfolie im Nutzformat zu kaschierenden Schichten ein Kartenrohling, eine Laminatschichtung oder eine fertige, zu individualisierende bzw. komplettierende Karte (Chipkarte) ist.

10. Verfahren nach einem der Ansprüche 1-9, dadurch gekennzeichnet, daß beim Kaschieren der in der Positionieröffnung (21) des Rahmens (20) im Laminator eingelegten Schichten erweichtes Randkarten-Kunststoffmaterial in Spaltzwischenräume einfließt und die Datenfolie (11') im Nutzformat umgibt, wobei die an der Datenfolie anhaftende, über deren Randbereich hinausreichende Trägerfolie zusätzlich als Dichtung in Verbindung mit dem auf ihr aufliegenden Positionieröffnungsausschnitt dient.

11. Verfahren nach einem der Ansprüche 1-10, dadurch gekennzeichnet, daß die Höhenabmessungen(C) des Rahmens zwischen den beiden Preßstempeln (22, 23) des Laminators nachgiebig-elastisch gehalten werden zur Anpassung an unterschiedliche Dickenverhältnisse der am Kaschiervorgang beteiligten Laminatschichten einschließlich Datenfolie.

12. Vorrichtung zur Herstellung oder Vervollständigung (Individualisierung) von Karten wie Kreditkarten, Ausweisen, Zugangskontrollkarten, Identitätskarten, Chipkarten u. dgl., wobei entsprechende Daten, gegebenenfalls einschließlich Bilddarstellung, mittels Videodruckverfahren - gegebenenfalls spiegelverkehrt - auf eine spätere Kartenschicht aufgebracht und die aus dieser und mindestens einer weiteren Schicht bestehende Karte laminiert wird, gekennzeichnet durch einen zwischen oberem und unterem Preßstempel (22, 23) im Laminiergerät angeordneten Positionierrahmen (20) mit einer mittleren Positionieröffnung (21), die der paßgerechten Aufnahme einer durch anderweitige Positioniermarkierungen in ihrer Position festgelegten, mit anderen Schichten zu laminierenden Datenfolie (11') im Nutzformat dient, wobei in die Positionieröffnung (21) und dadurch auf die Datenfolie ausgerichtet weitere Laminatschichten (Kartenrohling, fertige Chipkarte u. dgl.) eingeschichtet sind.

13. Vorrichtung nach Anspruch 12, dadurch gekennzeichnet, daß der Positionierrahmen (20) in seinen Höhenabmessungen nachgiebig-elastisch ausgebildet ist.

14. Vorrichtung nach Anspruch 12 oder 13, dadurch gekennzeichnet, daß der Positionierrahmen mindestens eine nachgiebige elastomere Schicht aufweist zum Ausgleich von Höhendifferenzen im Bereich der zu laminierenden Schichten.

15. Vorrichtung nach einem der Ansprüche 12-14, dadurch gekennzeichnet, daß die aus einem Elastomer (Kautschuk, Silikon, Gummi u. dgl.) bestehende elastische Schicht (25) des Positionierrahmens (20) von einer weiteren metallischen Schicht, mindestens teilweise im Randbereich, abgedeckt ist.

16. Vorrichtung nach einem der Ansprüche 1-15, dadurch gekennzeichnet, daß der Positionierrahmen (20) im Öffnungsbereich des Laminiergeräts zwischen oberem und unterem Preßstempel (22, 23) gelenkig abklappbar gelagert ist.

17. Vorrichtung nach einem der Ansprüche 12-16, dadurch gekennzeichnet, daß im zwischen oberem und unterem Preßstempel (22, 23) des Laminators gebildeten Öffnungsbereich Positionsmarkierungen (Stifte) angeordnet sind, die zur hochpräzisen Ausrichtung der Datenfolie in Ausnehmungen oder Vorsprünge einer mit dieser verbundenen, randseitig entsprechend komplementäre Positionsmarkierungen aufweisenden Trägerfolie (12) eingreifen.

18. Vorrichtung nach einem der Ansprüche 12 bis 17, dadurch gekennzeichnet, daß anstelle von bzw. ergänzend zu der Höhennachgiebigkeit des Positionsrahmens einer der Paßstempel elastomere Eigenschaften aufweist.

19. Vorrichtung nach Anspruch 18, dadurch gekennzeichnet, daß der obere Paßstempel (22) eine Wärmeleitfolienbeschichtung mit elastomerem Verhalten aufweist.
